# NEUE EUROPÄISCHE PATENTSCHRIFT

(11) **EP 2 692 268 B2**
(45) Veröffentlichungstag und Bekanntmachung des Hinweises auf die Entscheidung über den Einspruch: **09.12.2020**
(45) Hinweis auf die Patenterteilung: 17.09.2014
(21) Anmeldenummer: 13190721.4
(22) Anmeldetag: 06.07.2012
(51) Int. Cl.: A47J 27/08, A47J 27/092

(54) **Verfahren zum Abbau des Druckes im Garraum eines Druckgargerätes**
A method for reducing the pressure in the cooking chamber of a pressure cooker
Procédé pour réduire la pression dans la chambre de cuisson d'un autocuiseur

(30) Priorität: 06.07.2011 DE 102011107255; 17.11.2011 DE 102011118779
(43) Veröffentlichungstag der Anmeldung: 05.02.2014
(62) Teilanmeldung aus: 12175278.6
(73) Patentinhaber: MKN Maschinenfabrik Kurt Neubauer GmbH & Co. KG, 38300 Wolfenbüttel (DE)
(72) Erfinder: Socher, Michael, 38300 Wolfenbüttel (DE); Ruhe, Dirk, 38667 Bad Harzburg (DE)
(74) Vertreter: Strobel, Wolfgang

(56) Entgegenhaltungen:
- EP-A1- 1 342 441
- EP-B1- 1 680 993
- DE-A1- 19 700 602
- DE-B3-102004 011 390
- US-A- 2 555 230
- US-A- 3 823 657
- US-A- 4 246 835

## Beschreibung

Die vorliegende Erfindung betrifft ein Verfahren zum Abbau des Druckes im Garraum eines Druckgargerätes mit einer aus dem Garraum führenden verschliessbaren Leitung zum Abführen von Dampf aus dem Garraum, mit einem Stellventil und mit einer Wassereinspritzung, über die Wasser in den aus dem Garraum über das Stellventil entweichenden Dampf einspritzbar ist, zum Druckabbau nach einem Kochprozess in einem derartigen Druckgargerät.

Druckgargeräte bieten die Möglichkeit, Speisen unter Druck bei Luftabschluss zu garen. Diese Zubereitungsform für Speisen ermöglicht eine besonders schonende und auch schnelle Form der Produktzubereitung. Solche Druckgargeräte gibt es sowohl für Anwendungen in Haushalten, als auch als Grossküchengerät.

Mehrere Gerätetypen dieser Druckgargeräte, auch als Druckgarer bezeichnet, sind am Markt verfügbar. Dazu gehören Druckgarbraisieren, bei denen die Zubereitung der Speisen direkt in einem Braisiertilgel erfolgt, Druckkochkessel, bei denen die Zubereitung in einem Kesselbehälter erfolgt, und Dampfgarer, bei denen die Zubereitung der Speisen in hierfür vorgesehenen Gastronorm-Behältern erfolgt. Diese Gastronorm-Behälter können aber auch zusätzlich bei den beiden erstgenannten Typen eingesetzt werden.

Bei allen Druckgargeräten muss nach dem Abschluss des Garprozesses, der wie erwähnt unter Druck stattgefunden hat, dieser Druck im Garraum auch wieder abgebaut werden. Dafür gibt es verschiedene Möglichkeiten. So ist es zum Beispiel bei Dampfgarern bekannt, Wasser als Kühlmedium direkt in den Garraum einzuspritzen. Durch die Abkühlung erfolgt automatisch der gewünschte Druckabbau. Ein in den Gastronom-Behälter integrierter Ablauf ermöglicht das Abfliessen des entstehenden unerwünschten Kondensates. Nachteilig ist der entstehende Wasserverbrauch und die durch das Abfliessen des Kondensates entstehenden Verluste und Abwässer. Eine gegenüber diesen bekannten Vorschlägen wesentlich verbesserte Möglichkeit zum Druckabbau ist aus der EP 1 342 441 A1 bekannt. Diese Druckschrift schlägt einen Druckabbauprozess vor, der wiederum mit der Beendigung des Kochprozesses eingeleitet wird. Der Druck aus dem Garraum wird kontrolliert über eine Öffnung mittels nachgeschaltetem Stellventil abgebaut. Das Öffnen dieses Stellventils erfolgt in Abhängigkeit des im Garraum vorhandenen Druckes oder alternativ auch einer gemessenen Temperatur, die über einen Sensor ermittelt wird. Nach dem Stellventil ist eine Wassereinspritzung in den entweichenden Dampf vorgesehen. Dies führt zu einer kontrollierten Kondensation.

Dies eröffnet verschiedene Möglichkeiten. So kann etwa mittels einer zusätzlichen Funktionstaste die Möglichkeit eines beschleunigten Druckabbaus angeboten werden. Angeregt wird auch ein Druckabbau in mehreren Stufen, der frei wählbar möglich sein könnte. Weitere Unterteilungen wären denkbar, sodass unterschiedlichste Druckabbaugeschwindigkeiten realisiert werden könnten.

Dies hätte den Vorteil, dass auch eine Zubereitung besonders empfindlicher Speisen wie etwa Blumenkohl in derartigen Geräten möglich wird. Derartige empfindliche Speisen benötigen einen schonenden, langsamen Druckabbau.

Die entsprechend der EP 1 342 441 A1 arbeitenden und am Markt angebotenen Geräte sind bereits sehr vorteilhaft und schonend, auch wenn ein Druckabbau in mehreren Stufen noch nicht realisiert ist. Die Umsetzung dieser Vorschläge bereitet Schwierigkeiten. Zwar kann ein Druckabbau verlangsamt werden, es besteht jedoch unverändert der Wunsch, den Druckabbau bei derartigen Druckgargeräten noch besser an die unterschiedlichen Anforderungen anzupassen, die durch empfindliche und weniger empfindliche Speisen gestellt werden.

Aufgabe der vorliegenden Erfindung ist es daher, ein Verfahren zum Abbau des Druckes im Garraum eines Druckgargeräts vorzuschlagen, das diesen Anforderungen noch besser Rechnung tragen kann.

Bei einem gattungsgemäßen Verfahren wird diese Aufgabe mittels der Erfindung dadurch gelöst, dass der Öffnungsgrad der Leitung zeitlich so gesteuert wird, dass der Druck im Garraum linear abgebaut wird, oder dass der Öffnungsgrad der Leitung zeitlich so gesteuert wird, dass der aus dem Garraum abgeführte Dampf mit einem konstanten Volumenstrom abgeführt wird.

Physikalisch ausgedrückt bedeutet der lineare Druckabbau, dass der Druckabbau mit einer konstanten Änderung gemessen beispielsweise in Pascal pro Sekunde angestrebt wird.

Die Formel würde also lauten: [Delta]pt [Pa/s] = konstant.

Eine andere alternative Ausführungsform der Erfindung besteht darin, den Druckabbau so vorzunehmen, dass der im Garraum vorhandene Dampf mit einem konstanten Volumenstrom abgeführt wird. Ein derartiger konstanter Volumenstrom führt zu einer besonders niedrigen Geräuschentwicklung, da Spitzen vermieden werden, die besonders relevant für die Entwicklung von Schallereignissen sind. Der Öffnungsgrad beziehungsweise -winkel bei dieser alternativen Ausführungsform würde also dazu führen, dass der Volumenstrom konstant ist, und es zu einem relativ gleichmässigen Druckabbau kommt.

Die Erfindung basiert auf der überraschenden Erkenntnis, dass für eine besonders schonende Behandlung empfindlicher Speisen im Druckabbauvorgang nicht nur eine Reduzierung eines maximal für den Dampf zur Verfügung stehenden Querschnitts sinnvoll ist, der beispielsweise durch ein Ventil freigegeben wird. Ein Druckabbau mit einem solchen den Querschnitt langsam reduzierenden Ventil ist zwar ein erster Ansatz, er führt jedoch zu einem schlecht reproduzierbaren und relativ ungleichmäßigen Druckabbau und einem stark schwankenden Dampfstrom.

Erfindungsgemäß wird nun anstelle oder jedenfalls ergänzend zu einem Druckabbau durch eine vorgegebene simple Reduzierung eines Querschnittes eine andere Form für einen Druckabbau gewählt, welche mit zeitlichen Taktungen und einem gepulsten Öffnen arbeitet.

Besonders bevorzugt lässt sich der Öffnungsgrad der Leitung dadurch zeitlich steuern, dass ein Motorventil eingesetzt wird und der Öffnungswinkel des entsprechenden Motorventils, der den Öffnungsgrad der Leitung insgesamt angibt, zeitlich gesteuert wird.

Um Ventile besonders zuverlässig einsetzen zu können, werden sie in Leitungen eingesetzt, die als Rohrleitungen aufgebaut sind. Dabei kann eine Anordnung aus mehreren Motorventilen eingesetzt werden, um eine besonders zuverlässige und präzise Steuerung des Öffnungsgrades der Leitung zu erhalten.

In einer bevorzugten Ausführungsform ist vorgesehen, jedem Gargut und/oder jedem Garprogramm eine geeignete Druckabbaustufe zuzuordnen. In der Gerätesteuerung werden hierzu die gewünschten Druckabbauarten hinterlegt. Die Gerätesteuerung oder auch manuell der Benutzer ordnet nun jedem Garprogramm in Abhängigkeit von dem empfindlichsten in dem Garraum befindlichen Gargut eine Druckabbaustufe zu.

Die jeweils erforderliche konkrete Steuerung des Öffnungsgrades beziehungsweise - winkels hängt von verschiedenen Parametern ab, die den Druckabbau im Garraum beeinflussen. Dazu gehört neben dem Betriebsdruck im Garraum auch der Energiegehalt im Garraum, der von der Grösse des Garraumes sowie von der Art und der Menge des im Garraum befindlichen Gargutes abhängt. Einen weiteren Einfluss hat auch der Energieeintrag in den Garraum, der dadurch entsteht, dass auch bei ausgeschalteter Heizung die Heizfläche noch Restwärme an das Gargut abgibt, was zu einer Druckerhöhung im Garraum führt, welcher Druck bei dem Vorgang des Druckabbaus ebenfalls zu berücksichtigen ist.

Diese verschiedenen Einflussfaktoren und Effekte können jeweils durch Phasen mit unterschiedlichen und variierenden Öffnungsgraden beziehungsweise -winkeln eingekoppelt werden.

Eine technische Lösung zur Umsetzung arbeitet wie folgt. Es wird ein Motorventil mit definierbaren Zwischenpositionen eingesetzt, welches die komplexen Öffnungsvarianten für das anzusteuernde Ventil ermöglicht.

Mit einem solchen Motorventil wird es möglich, zeitlich gesteuert sehr variabel einen Öffnungswinkel in einem Rohrquerschnitt oder einem Leitungsquerschnitt wie oben beschrieben anzusteuern, konstant zu halten und wieder zu reduzieren oder zu schließen.

Das Motorventil kann dieses auch getaktet oder mit sich ändernden Zykluszeiten vornehmen und dadurch fein abgestimmt auf bestimmte, vorgegebene Randbedingungen eingehen, die beispielsweise von einem Drucksensor oder einer Gerätesteuerung zugeführt werden.

Darüber hinaus lässt sich durch das erfindungsgemäße Vorgehen ein ausgezeichneter Kompromiss finden zwischen einerseits der häufig gewünschten Schnelligkeit eines Druckabbaus und damit dem zugehörigen Zeitgewinn und andererseits der schonenden Behandlung von solchen Speisen, die einer schonenden Behandlung auch dringend bedürfen. Auch der Wasserverbrauch bei der Ablöschung des Dampfes in Folge der Wassereinspritzung kann so minimiert werden, da der abzulöschende Dampf auch entsprechend erfindungsgemäß optimiert wird.

Die Geräuscherzeugung ist ebenfalls reduziert und die Umweltbelastung minimal, da alle im Garraum entstehenden Wrasen ausreichend abgelöscht werden können, was bei nicht exakt vorhersehbaren und schwankenden Dampfmengen kritisch ist. Der konstante und insbesondere exakt vorhersehbare Dampfstrom während des Druckabbaus ermöglicht also nicht nur eine gute Gargutqualität, sondern hat auch weitere Vorteile.

In einer Ausführungsform der Erfindung ist es bevorzugt, wenn die Geschwindigkeit des Druckabbaus in Abhängigkeit von der Menge des Gargutes gesteuert wird. Diese Ausführungsform macht von der Erkenntnis gebrauch, dass bei einem maximal gefüllten Tiegel und einem schnellen Druckabbau, etwa bedingt durch ein schlagartiges Sieden, flüssiges Gargut in unerwünschter Form vermehr in die Druckabbauleitung eintreten kann und auf diese Weise dem Garvorgang verlorengeht. Dieser unerwünschte Effekt kann durch diese erfindungsgemäße Ausführungsform vermieden oder jedenfalls reduziert werden.

Der für die Steuerung verwendete Wert des Druckes im Garraum kann entweder direkt durch eine Messeinrichtung zur Messung des Druckes festgestellt werden, oder auch alternativ durch eine Messeinrichtung zur Messung der Temperatur im Garraum, wobei die Gerätesteuerung dann so ausgerüstet sein sollte, dass sie aus dieser Temperatur auf den Druck im Garraum rückschliessen kann, und auf diese Weise dann doch den Druck für die weitere Steuerung heranzieht.

Möglich ist es außerdem, insbesondere am Ende eines Druckabbauvorgangs, also dann, wenn der Druckunterschied so gering ist, dass über die sonstigen Querschnitte der Volumenstrom sehr klein wird, mit einer Klappe zu arbeiten, die entsprechend geöffnet wird. Dies ist sehr kostengünstig und zugleich technisch zuverlässig.

Weitere bevorzugte Merkmale der Erfindung sind in den Unteransprüchen und in der folgenden Beschreibung der Figuren angegeben.

Im Folgenden wird anhand der Zeichnung die Durchführung von Ausführungsbeispielen der Erfindung näher erläutert. Es zeigen:
- Fig. 1:: eine schematische Darstellung des zeitlichen Verlaufs eines möglichen Verhaltens eines Motorventils;
- Fig. 2:: eine schematische Darstellung des zeitlichen Verlaufs eines anderen möglichen Verhaltens eines Motorventils;
- Fig. 3:: eine schematische Darstellung des zeitlichen Verlaufs eines möglichen Verhaltens eines Motorventils;und
- Fig. 4:: eine schematische Darstellung einer Ausführungsform eines Druckgargeräts.

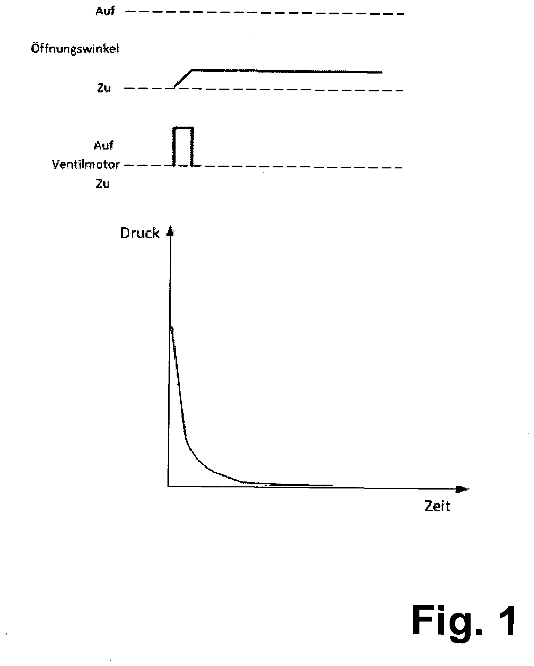

In den Fig. 1 bis 3 ist nach rechts die Zeit t aufgetragen, wobei jede Figur mehrere Kurven für unterschiedliche Grössen aufweist. Nach oben sind die jeweiligen Grössen aufgetragen, die beispielsweise die Stellung eines Motorventils, den Öffnungswinkel einer Leitung oder einen Druck im Garraum betreffen können. Der Begriff "Öffnungswinkel" ist hier für eine Leitung gewählt worden, um den Grad anzugeben, den ein Leitungsquerschnitt geöffnet ist. Hier könnte also auch eine Prozentangabe, eine Angabe in mm², oder etwas Ähnliches verwendet werden.

In der Figur 1 ist dargestellt, wie bei einem Druckgargerät mit einer durch ein Motorventil beziehungsweise einen Ventilmotor geführten Leitung zur Abführung von Dampf aus dem Garraum der Verlauf verschiedener Werte aussieht.

Man sieht oben den Öffnungsgrad beziehungsweise -winkel, der sich in der Leitung einstellt.

Darunter ist der zeitliche Verlauf der Energieaufnahme des Ventilmotors dargestellt.

In der Figur 1 sieht man, dass der Ventilmotor für einen kurzen Moment angeschaltet und dann gleich wieder abgeschaltet wird. Entsprechend ist ein kurzer Balken zu sehen. Darüber sieht man den Effekt für den Öffnungswinkel in der Leitung. Die Leitung ist zunächst vollständig geschlossen, lässt mithin keinen Querschnitt für das Durchströmen von Dampf zu. Wird nun der Ventilmotor für einen kurzen Moment angestellt, so öffnet sich der Öffnungswinkel während dieses kurzen Moments geringfügig und bleibt nach dem Abschalten des Ventilmotors bei genau diesem Wert stehen.

In der unter diesen beiden Kurven dargestellten Kurve ist der Druck über den Verlauf mit der Zeit dargestellt. Bei geschlossenem Öffnungswinkel und nicht eingeschaltetem Ventilmotor ist der Druck mithin maximal. Sowie die Leitung bei Einschalten des Ventilmotors etwas geöffnet wird, sinkt der Druck rasch ab. Da der Öffnungswinkel nach Abschalten des Ventilmotors konstant ist, strömt weiter Dampf durch den geöffneten Bereich der Rohrleitung, sodass der Druck mit der Zeit weiter abnimmt.

Die Druckabnahme ist geschätzt in solchen Fällen exponentiell.

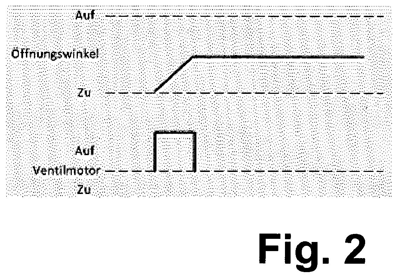

In der Figur 2 sieht man die entsprechende Kurve, wenn der Ventilmotor für einen etwas längeren Zeitraum eingeschaltet wird. Dies hat lediglich zur Folge, dass der Öffnungswinkel sich über einen etwas längeren Zeitraum hinweg vergrößert. Wird dann der Ventilmotor abgeschaltet, bleibt der Öffnungswinkel bei der dieser größeren Öffnung stehen.

Eine Darstellung des Druckes über die Zeit wäre hier entsprechend der Darstellung aus Figur 1, natürlich mit noch rascher abfallendem Druck.

Die beiden Kurven in den Figuren 1 und 2 erläutern lediglich die nun im Folgenden gegebenen Darstellungen eines erfindungsgemässen Vorgehens, da sie Teilabschnitte für das Funktionieren des Systems näher erläutern.

Man sieht in den Figuren 1 und 2, dass bei einem derart einfachen Druckabbau die Druckreduktion am Anfang sehr groß ist und sich danach kontinuierlich verringert. Auch die durch die Einspritzung von Wasser abzulöschende Dampfmenge nimmt im späteren Verlauf kontinuierlich ab.

Mit der Erfindung wird dieser unerwünschte Effekt vermieden, wie in den im Folgenden dargestellten Figuren zu sehen ist.

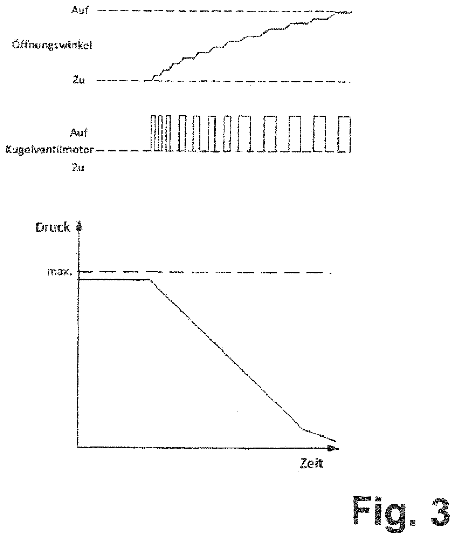

In der Figur 3 ist ein erfindungsgemäßer Verlauf dargestellt, bei dem die Einschaltzeiten ebenso wie die Verweilzeiten von Zyklus zu Zyklus steigen. Das führt dazu, dass der Öffnungswinkel sich von Zyklus zu Zyklus mehr vergrößert, aber die gleiche Anstiegsgeschwindigkeit hält. Der Öffnungswinkel wird also nicht nur in jedem Zyklus größer, sondern auch die Zeitspanne der Öffnung nimmt immer mehr zu.

Dieses Vorgehen kann zum regelmäßigen Abschalten nach Beendigung eines Kochprozesses herangezogen werden. Die Zyklen werden dabei solange fortgesetzt, bis schließlich der Normaldruck beziehungsweise der atmosphärische Druck im Garraum erreicht ist. Die Parameter mit den Einschaltzeiten und den Wartezeiten für den Ventilmotor werden von der Steuerung des Gargerätes vorgegeben.

Dabei kann die Gerätesteuerung in Abhängigkeit von dem vorher eingestellten Garprogramm für die gerade zubereitete Speise den geeigneten und optimalen Vorgang für das gegarte Gargut einstellen.

Wenn dagegen für ein bestimmtes Gargut ein schnellerer Druckabbau möglich oder gewünscht ist, kann dies durch steilere Flanken und/oder kürzere Taktung erzielt werden. Auch das kann in der Gerätesteuerung so hinterlegt werden.

Die eingezeichnete Kurve des Druckabbaus ist hier eine idealisierte Kurve, welche die einzelnen Peaks jeweils glättet.

Damitkönnendieohnedie Erfindungbestehenden Probleme von starken Schwankungen der abzulöschenden Dampfmengen über die Zeit und des Qualitätsverlustes am Gargut vollständig vermieden werden.

Man sieht in der Figur 3, dass hier alle Möglichkeiten kombiniert werden beziehungsweise werden können. Es hat sich als sehr vorteilhaft herausgestellt, das Motorventil mit dem Ventilmotor in ansteigenden Intervallen aufzufahren. Je nach Speise kann zwischen den Intervallen dann eine Verweilzeit vorgesehen werden, um dem Gargut zusätzlich Zeit zu geben, sich zu entspannen und dem reduzierten Druck anzupassen.

Durch die gezielte Vergrößerung des freigegebenen Querschnitts der Leitung kann anstelle des linearen Druckverlaufs natürlich auch ein gleichmäßiger Dampfvolumenstrom erzeugt werden (nicht dargestellt), wenn dies erwünscht ist. Hierzu wählt der Benutzer beispielsweise eine Option des geräuschreduzierten Druckabbaus in der Steuerung des Gargerätes, Anhand des Differenzdrucks wird in diesem Fall der Öffnungswinkel so angepasst, dass sich ein konstanter Volumenstrom einstellt.

Zur Steuerung der präzisen Öffnungsgrade einer Gesamtleitung ist es in einigen Ausführungsformen der Erfindung vorgesehen, dass über zumindest einen Teilabschnitt der Leitung zum Abführen von Dampf aus dem Garraum mehrere strömungstechnisch zueinander parallel verlaufende Teilleitungen vorgesehen sind. Diese Teilleitungen können dann je nach Ausführungsform jeweils mit einem Ventil geöffnet beziehungsweise geschlossen werden. Diese Ventile bilden dann zusammen eine Anordnung aus einem oder mehreren Motorventilen.

Bei Versuchen hat sich eine Anordnung aus zwei oder drei derartigen Teilleitungen mit je einem Ventil als besonders sinnvoll erwiesen, insbesondere zur Frage des optimalen Verhältnisses aus Kosten und Nutzen.

In anderen Ausführungsformen ist vorgesehen, in eine Leitung mehrere Ventile in Reihe hintereinander einzuschalten und dann die Querschnitte durch Abstufungen nacheinander abzustufen.

Es sei am Rande angemerkt, dass eine ähnliche Konzeption auch geeignet wäre, eine Wasserzufuhr fürdas Druckgargerät ebenfalls effektiv und kostengünstig zu steuern. Dabei könnten dann in der Wasserzufuhrleitung ebenfalls mehrere zueinander parallel verlaufende Wasserzufuhrteilleitungen vorgesehen werden, die dann jeweils mit einem Ventil einer Ventilanordnung geöffnet oder geschlossen werden können. Bei dieser Zulaufdosierung ist dann ebenfalls mittels sehr weniger Standardventile eine sehr präzise und nahezu kontinuierliche Steuerung des Öffnungsquerschnittes und damit der zugeführten Wassermengen je Zeit möglich.

Gemäß einer alternativen Ausführungsform der Erfindung ist es möglich, die eingespritzte Wassermenge zusätzlich auch abhängig von dem Volumenstrom des Dampfes zu steuern.

Sowohl bei der Wasserzufuhr wie auch bei der entsprechenden Dosierung des Querschnittes in der Leitung zum Abführen von Dampf aus dem Garraum entsteht eine Kaskade zusammengefasster Ventile.

Die Ansteuerung ist recht einfach. Die mehreren Ventile müssen dann nur geöffnet und geschlossen werden, während bei einer komplexeren Anordnung mit nur einem Ventil dessen Ansteuerungszeiten präzise beobachtet werden müssen. Auch dies hat bei dem Vorhandensein präzise ansteuerbare Motorventile bei anderen Ausführungsformen aber auch Vorteile.

Die Steuerung vereinfacht sich auch dadurch, dass kein Startzustand präzise definiert werden muss, um etwa einen Querschnitt zur Hälfte freizugeben. Bei einem zeitlich steuerbaren Motorventil bedeutet dies ausgehend von einem geschlossenen Ventil 7,5 Sekunden Ventitmotortaufzeit bei einer Gesamtlaufzeit von 15 Sekunden. Ist der Zustand in der Steuerung nicht bekannt, müsste zunächst eine Endlage angefahren werden. Erschwerend kommt hinzu, dassein Kugelhahn den Querschnitt nicht linear freigibt. Anfangs bewirkt eine Ventilmotorfaufzeit von wenigen Sekunden eine große Änderung im freigegebenen Querschnitt. Ist der Durchlass weiter gedreht, bewirkt die Restdrehung allerdings einen geringeren Effekt.

Bei einer parallelen Anordnung aus mehreren Ventilen kann dagegen völlig unabhängig von den Ausgangsbedingungen der gewünschte Zustand eingestellt werden.

Eine weitere Möglichkeit besteht in der Parallelschaltung einer Klappe beziehungsweise eines Magnetventils, welches erst nach Unterschreiten eines Schwellwertes des Druckes geöffnet werden kann.

Es entsteht mithin je nach Anwendungsfall eine günstige, steuerungstechnisch einfache und zuverlässige Lösung mit einer Parallelschaltung aus mehreren Ventilen. Bei einer Schaltung mit nur einem Ventil ist dagegen der Platzbedarf, der konstruktive Aufwand und auch die Anzahl der Bauteile geringer.

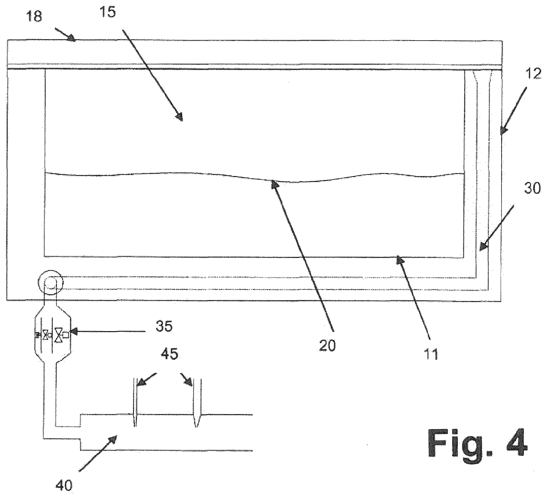

In der Figur 4 ist ein Druckgargerät schematisch im Schnitt dargestellt. Man sieht einen Tiegel 10 mit einem Tiegelboden 11 und einer Tiegelwandung 12. Die Tiegelwandung 12 umgibt einen Garraum 15, in welchem sich ein Gargut 20 befindet. Der Garraum 15 ist nach oben durch einen Deckel 18 abgeschlossen. In dem Garraum 15 kann ein Druck aufgebaut werden. Um diesen Druck in dem Garraum 15 abbauen zu können, ist eine Leitung 30 zum Abführen von Dampf aus dem Garraum 15 vorgesehen.

In der lediglich schematisch dargestellten Leitung 30 befindet sich eine Anordnung 35 mit einem oder mehreren Ventilen; in der dargestellten Ausführungsform ist eine Parallelschaltung mit drei Teilleitungen angedeutet, die von jeweils einem Ventil dieser Ventilanordnung 35 ganz oder teilweise geschlossen werden können.

Die Ventilanordnung führt dann zu einem Ablöschkasten 40. Im Bereich des Ablöschkastens 40 ist eine Wassereinspritzung 45 vorgesehen, mit der Wasser in den Dampf eingespritzt werden kann. Dieser Dampf strömt aus dem Garraum 15 über die Leitung 30 und die Ventilanordnung 35 sowie den Ablöschkasten 40 zu einem (nicht dargestellten) Ausgang.

### Bezugszeichenliste

- 10:: Tiegel oder Kochbehälter
- 11 :: Tiegelboden
- 12 :: Tiegelwandung
- 15 :: Garraum
- 18 :: Deckel oder Kochgerätedeckel
- 20 :: Gargut
- 30 :: Leitung
- 35 :: Anordnung mit einem oder mehreren Ventilen
- 40 :: Ablöschkasten
- 45 :: Wassereinspritzung

## Patentansprüche

1. Verfahren zum Abbau des Druckes im Garraum (15) eines Druckgargerätes mit einer aus dem Garraum (15) führenden verschließbaren Leitung (30) zum Abführen von Dampf aus dem Garraum (15), mit einer Ventilanordnung (35) und mit einer Wassereinspritzung (40), über die Wasser in den aus dem Garraum (15) über die Ventilanordnung (35) entweichenden Dampf einspritzbar ist, wobei der Öffnungsgrad der Leitung (30) zeitlich gesteuert wird,
**dadurch gekennzeichnet,**
**dass** der Öffnungsgrad der Leitung (30) zeitlich so gesteuert wird, dass der Druck im Garraum (15) linear abgebaut wird, oder
**dass** der Öffnungsgrad der Leitung (30) zeitlich so gesteuert wird, dass der aus dem Garraum (15) abgeführte Dampf mit einem konstanten Volumenstrom abgeführt wird.

2. Verfahren nach Anspruch 1, **dadurch gekennzeichnet, dass** abhängig von einer Druckmessung im Garraum (15) und/oder abhängig von einer Druckbestimmung durch eine Messung der Temperatur und Rückschluss auf den Druck im Garraum (15) eine zeitlich begrenzte Öffnung der Leitung (30) und/oder eine Öffnung mit einem reduzierten Öffnungsgrad erfolgt.

3. Verfahren nach einem der vorstehenden Ansprüche, **dadurch gekennzeichnet, dass** abhängig von dem Volumenstrom des Dampfes die Wassermenge, die eingespritzt wird, gesteuert wird.

4. Verfahren nach einem der vorstehenden Ansprüche, **dadurch gekennzeichnet, dass** eine Angabe über eine Art eines Gargutes (20) manuell eingegeben, automatisch erfasst oder in einem Garprogramm vorgesehen ist, und dass der Öffnungsgrad der Leitung (30) abhängig von der Art des Gargutes (20) gesteuert wird.

5. Verfahren nach einem der vorstehenden Ansprüche, **dadurch gekennzeichnet, dass** eine Geschwindigkeit, mit welcher der Druck abgebaut wird, in Abhängigkeit von der Menge des Gargutes gesteuert wird.

## Claims

1. A method for reducing the pressure in the cooking chamber (15) of a pressure cooker with a sealable line (30) leading from the cooking chamber (15) for the removal of steam from the cooking chamber (15), with a valve arrangement (35) and with a water injector (40) by means of which water can be injected into the steam escaping from the cooking chamber (15) via the valve arrangement (35), wherein the degree of opening of the line (30) is controlled over time,
**characterised in that**
the degree of opening of the line (30) is controlled over time in such a manner that the pressure in the cooking chamber (15) is reduced in a linear manner, or
that the degree of opening of the line (30) is controlled over time in such a manner that the steam removed from the cooking chamber (15) is removed with a constant flow rate.

2. The method according to claim 1, **characterised in that** a time-limited opening of the line (30) and/or an opening with a reduced degree of opening is implemented dependent upon a measurement of pressure in the cooking chamber (15) and/or dependent upon a determination of the pressure through a measurement of the temperature and an inference regarding the pressure in the cooking chamber (15).

3. The method according to any one of the preceding claims, **characterised in that** the volume of water which is injected is controlled dependent upon the flow rate of the steam.

4. The method according to any one of the preceding claims, **characterised in that** a specification regarding a type of food to be cooked (20) is entered manually, registered automatically or provided in a cooking program, and that the degree of opening of the line (30) is controlled dependent upon the type of food to be cooked (20).

5. The method according to any one of the preceding claims, **characterised in that** a rate at which the pressure is reduced is controlled dependent upon the volume of the food to be cooked.

## Revendications

1. Procédé pour réduire la pression dans la chambre de cuisson (15) d'un appareil de cuisson sous pression, qui comporte une conduite (30) obturable, menant hors de la chambre de cuisson (15), pour dissiper de la vapeur de la chambre de cuisson (15), un agencement de soupapes (35) et une injection d'eau (40), par l'intermédiaire de laquelle de l'eau peut être injectée dans la vapeur s'échappant de la chambre de cuisson (15) au travers de l'agencement de soupapes (35), le degré d'ouverture de la conduite (30) étant contrôlé dans le temps,
**caractérisé en ce que**
le degré d'ouverture de la conduite (30) est commandé dans le temps de sorte que la pression dans la chambre de cuisson (15) est réduite linéairement, ou
le degré d'ouverture de la conduite (30) est commandé dans le temps de sorte que la vapeur, dissipée de la chambre de cuisson (15), est évacuée avec un débit volumique constant.

2. Procédé selon la revendication 1, **caractérisé en ce qu'**une ouverture limitée dans le temps de la conduite (30) et/ou une ouverture avec un degré d'ouverture réduit s'effectuent en fonction d'une mesure de pression dans la chambre de cuisson (15) et/ou en fonction d'une détermination de à pression par une mesure de la température et conclusion sur la pression dans la chambre de cuisson (15).

3. Procédé selon l'une des revendications précédentes, **caractérisé en ce que** la quantité d'eau injectée est commandée en fonction du débit volumique de la vapeur.

4. Procédé selon l'une des revendications précédentes, **caractérisé en ce qu'**une indication sur la nature d'un produit à cuire (20) est introduite manuellement, détectée automatiquement ou prévue dans un programme de cuisson, et que le degré d'ouverture de la conduite (30) est commandé en fonction de la nature du produit à cuire (20).

5. Procédé selon l'une des revendications précédentes, **caractérisé en ce qu'**une vitesse, à laquelle la pression est réduite, est commandée en fonction de la quantité du produit à cuire.
